# EUROPEAN PATENT SPECIFICATION

(11) **EP 4 513 634 B1**
(45) Date of publication and mention of the grant of the patent: **16.09.2026**
(21) Application number: 22945344.4
(22) Date of filing: 10.06.2022
(51) Int. Cl.: H01M 50/133, H01M 50/15, H01M 50/325, H01M 50/103, H01M 50/169

(54) **BATTERY CELL, BATTERY AND ELECTRIC APPARATUS**
BATTERIEZELLE, BATTERIE UND ELEKTRISCHE VORRICHTUNG
ÉLÉMENT DE BATTERIE, BATTERIE ET APPAREIL ÉLECTRIQUE

(43) Date of publication of application: 26.02.2025
(60) Divisional application: 26194898.8
(73) Proprietor: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); WANG, Peng, Ningde, Fujian 352100 (CN)
(74) Representative: Gong, Jinping
(86) International application number: PCT/CN2022/098202
(87) International publication number: WO 2023/236203

(56) References cited:
- EP-A2- 1 246 274
- CN-A- 102 386 435
- CN-A- 103 872 269
- CN-A- 103 996 803
- CN-A- 107 851 739
- CN-U- 214 848 800
- JP-A- 2011 181 215
- JP-A- 2014 120 470
- JP-A- 2021 034 134
- US-A1- 2017 149 023

## Description

### Technical Field

The present disclosure relates to the technical field of batteries, and in particular to a battery cell, a battery and a power consuming device.

### Background Art

A rechargeable battery cell, which may be referred to as a secondary battery cell, refers to a battery cell of which active materials can be activated by means of charging for reuse after the battery cell is discharged. The rechargeable battery cell is widely used in electronic devices, such as mobile phones, laptops, electric mopeds, electric vehicles, electric airplanes, electric ships, electric toy cars, electric toy ships, electric toy airplanes, and electric tools. The safety of the battery cell in use is very important for users. US 2017/149023 A1 describes a secondary battery includes an electrode assembly including a first electrode plate, a second electrode plate, a separator between the first electrode plate and the second electrode plate, a can accommodating the electrode assembly, and a cap assembly coupled to and sealing the can, wherein a top end and a bottom end of the can each have a thickness that is greater than a thickness of a middle portion of the can. EP 1246 274 A2 describes a battery having a metal outer can. JP 2011 181215 A describes a prismatic battery including a power generation element group and a manufacturing method thereof. JP 2021 034134 A describes a power storage device including a metal case body for accommodating an electrode assembly, a metal lid for closing an opening of the case body, and a welded portion, wherein the case body and the lid are welded together. CN 107 851 739 A describes a battery cell housing comprising a housing shell and a housing cover.

### Summary of the Invention

In an aspect of the present disclosure, a battery cell is provided. The battery cell includes: a shell including a plurality of side plates that enclose an end opening of the shell; an electrode assembly arranged in the shell; and an end cap arranged at the end opening, the end cap including a plurality of edge portions that are fixedly connected to an end surface of the end opening and respectively correspond to the plurality of side plates, wherein the plurality of side plates include a first side plate and a second side plate with different thicknesses, and the plurality of edge portions include a first edge portion corresponding to the first side plate and a second edge portion corresponding to the second side plate; and an outer wall of the first side plate is substantially flush with an outer side surface of the first edge portion in a thickness direction of the first side plate, and an outer wall of the second side plate is substantially flush with an outer side surface of the second edge portion in a thickness direction of the second side plate.

The shell of the battery cell can meet the specific requirements of the battery cell by means of the side plates with different thicknesses. For example, the requirement for vibration resistance or impact resistance can be met by means of a thicker side plate, so that the corresponding surface of the battery cell is not prone to deformation or damage, thereby improving the reliability of the electrode assembly in the shell. For the first side plate and the second side plate with different thicknesses, the outer wall of each side plate is substantially flush with the outer side surface of the corresponding edge portion in the corresponding thickness direction, which can meet the quality requirements during welding of the outer wall of the side plate to the outer side surface of the edge portion, ensure reliable connection between the shell and the end cap, improve the safety of the battery cell in use, and solve the problem that the welding cannot be performed or the welding quality cannot meet the requirements due to a large distance between the outer wall of the side plate and the outer side surface of the edge portion.

In some embodiments, a distance between the outer wall of the first side plate and the outer side surface of the first edge portion is less than 0.8 mm, and/or a distance between the outer wall of the second side plate and the outer side surface of the second edge portion is less than 0.8 mm.

Allowing the distance between the outer wall and the outer side surface of the corresponding edge portion of each of the side plates with different thicknesses to be less than 0.8 mm can ensure the welding quality during welding to achieve reliable connection between the shell and the end cap.

In some embodiments, the outer wall of the first side plate is coplanar with the outer side surface of the first edge portion, and/or the outer wall of the second side plate is coplanar with the outer side surface of the second edge portion.

For the side plates with different thicknesses, the outer wall being coplanar with the outer side surface of the corresponding edge portion allows the outer wall to be completely flush with the outer side surface of the edge portion of the side plate, which can achieve better welding quality to improve the connection reliability between the shell and the end cap.

In some embodiments, the end cap includes a body portion, the plurality of edge portions are located on a periphery of the body portion, and the body portion is provided with a protruding portion that protrudes relative to the plurality of edge portions and is located on an inner side of the end opening.

Such a connection structure between the shell and the end cap formed by welding may be generally formed by means of laser welding, on the outside of the battery cell, for a gap where the end surface of the end opening abuts with the edge portion on the corresponding side. Compared with penetration welding in a thickness direction of the end cap, when a weld seam is welded through by laser, the protruding portion of the body portion can block the laser so as to eliminate the risk of laser damage of the electrode assembly, and the battery cell can be rotated relative to a laser welding gun to form the entire weld seam during welding, thereby achieving higher welding efficiency.

In some embodiments, the first edge portion protrudes relative to the protruding portion by a distance of L1 in the thickness direction of the first side plate, and the second edge portion protrudes relative to the protruding portion by a distance of L2 in the thickness direction of the second side plate, L1 and L2 satisfying L1 ≠ L2.

Each edge portion located on the periphery of the body portion can form a step structure with the protruding portion of the body portion. In this step structure, the distance L1 by which the first edge portion protrudes relative to the protruding portion is not equal to the distance L2 by which the second edge portion protrudes relative to the protruding portion, so that when the end cap is assembled to the shell, it can more convenient to design different protruding distances that match different thicknesses of the side plates, so as to meet, for example, the requirement of achieving the effect of the outer walls of the side plates with different thicknesses being substantially flush with the outer side surfaces of the edge portions.

In some embodiments, the thickness D1 of the first side plate is less than the thickness D2 of the second side plate, L1 and L2 satisfying L1 < L2.

The distance by which the edge portion protrudes relative to the protruding portion is equivalent to the width of a step surface of the step structure. For a side plate with a larger thickness, using a larger protruding distance can achieve a larger size of lap joint between the end surface of the side plate and the edge portion on this side, and can allow the outer wall of the side plate on this side to be more flush with the outer side surface of the corresponding edge portion, so as to meet the requirement of quality during welding of the outer wall of the side plate to the outer side surface of the edge portion to ensure reliable connection between the shell and the end cap, thereby improving the safety of the battery cell in use.

According to present invention, the first side plate and the second side plate are adjacent to each other, the thickness D1 of the first side plate is less than the thickness D2 of the second side plate, adjacent parts of the first side plate and the second side plate form an arc-shaped transition portion, the fillet radius r1 of the arc-shaped transition portion is greater than or equal to the thickness D1 of the first side plate, and the round radius R1 of the arc-shaped transition portion is greater than or equal to the thickness D1 of the first side plate.

For the first side plate and the second side plate which have different thicknesses and are adjacent to each other, when an extrusion molding process is used, allowing both the fillet radius and the round radius of the arc-shaped transition portion between the adjacent side plates to be greater than or equal to the thickness of the thinner first side plate can improve the material fluidity and the strength of the shell during the profile extrusion.

In some embodiments, the thickness D1 of the first side plate satisfies D1 ≥ 0.3 mm.

Allowing the thickness of the thinner first side plate to be greater than or equal to 0.3 mm can satisfy the manufacturability of the first side plate during the extrusion molding process.

In some embodiments, the thickness D1 of the first side plate satisfies 0.3 mm ≤ D1 ≤ 2 mm.

By means of further defining the thickness of the first side plate to be greater than or equal to 0.3 mm and less than or equal to 2 mm, it is possible to use less and lighter material while satisfying the manufacturability of the first side plate during the extrusion molding process.

In some embodiments, the thickness D1 of the first side plate and the thickness D2 of the second side plate satisfy D1 < D2 ≤ 4 * D1.

If the difference between the thickness of the thicker second side plate and the thickness of the thinner first side plate is too large, there may be a problem of tear of interface of the first side plate and the second side plate due to uneven material flowing or excessive difference of flow velocity during the extrusion molding process. Therefore, allowing the thickness of the second side plate to be greater than the thickness of the first side plate but not greater than four times the thickness of the first side plate can improve the extrusion molding effect while satisfying the thickness relationship between the side plates.

In some embodiments, the fillet radius r1 satisfies 0.4 mm ≤ r1 ≤ 2.5 mm.

Allowing the fillet radius r1 to satisfy 0.4 mm ≤ r1 ≤ 2.5 mm can improve the material fluidity during the extrusion molding process and facilitate the mounting of the electrode assembly.

In some embodiments, the fillet radius r1 and the round radius R1 satisfy r1 + D1 ≤ R1 ≤ r1 + D2.

The fillet radius r1 and the round radius R1 satisfying r1 + D1 ≤ R1 ≤ r1 + D2 can improve the strength of the arc-shaped transition portion of the shell.

According to present invention, the shell is formed by means of the extrusion molding process.

For making the shell, the extrusion molding process has a lower cost and higher efficiency and yield.

In some embodiments, the shell is a square tube, the plurality of side plates further include a third side plate and a fourth side plate, the first side plate is opposite to the third side plate, the second side plate is opposite to the fourth side plate, the first side plate and the third side plate are both connected between the second side plate and the fourth side plate, the second side plate is configured to be mounted on a bottom wall of a case of a battery, the thickness of the second side plate is greater than the thickness of the first side plate and greater than the thickness of the third side plate, and the thickness of the second side plate is greater than or equal to the thickness of the fourth side plate.

The second side plate and the fourth side plate are respectively equivalent to a bottom plate and a top plate of the shell, and the first side plate and the third side plate are equivalent to opposite vertical plates located between the bottom plate and the top plate. Allowing the bottom plate to be thicker can reduce the risk of deformation or damage when the bottom plate is subjected to vibration and impact, improving the reliability of the electrode assembly within the battery cell and prolonging the service life of the battery cell.

For an embodiment in which the bottom plate and the top plate have the same thickness, allowing the top plate and the bottom plate opposite to each other to have the same thickness can maintain the uniformity during flowing of material on upper and lower sides, which is conducive to elimination of uneven thickness or cracks caused by inconsistent flow velocities. For an embodiment in which the bottom plate is thicker than the top plate, allowing the thickness of the bottom plate to be greater than that of the top plate can correspondingly reduce the weight and the material usage amount of the shell and improve the volume of internal space of the shell while reducing the risk of deformation or damage of the bottom plate when the bottom plate is subjected to vibration and impact, which is conducive to improvement of the energy density of the battery cell.

In some embodiments, the thickness of the first side plate is equal to the thickness of the third side plate.

For the extrusion molding process, allowing the two vertical plates opposite to each other to have the same thickness can maintain the uniformity of material flowing on left and right sides, which is conducive to elimination of uneven thickness or cracks caused by inconsistent flow velocities.

In some embodiments, the thickness of the fourth side plate is greater than the thickness of the first side plate and greater than the thickness of the third side plate.

Allowing the thickness of the top plate to be greater than that of the vertical plate can minimize the deformation and damage of the top plate when the battery is abnormal, for example, when the internal pressure of the battery is too high.

In some embodiments, the battery cell further includes a pressure relief mechanism arranged on the bottom plate.

The pressure relief mechanism can be actuated when the internal gas pressure of the shell reaches a threshold to release the pressure, thereby ensuring the safety performance of the battery cell. A thicker bottom plate can increase the area of connection between the pressure relief mechanism and the bottom plate, so as to strengthen the support for the pressure relief mechanism to prevent the damage of a pressure relief valve due to insufficient connection strength and the like, thereby improving the safety performance of the battery cell.

In some embodiments, the end surface of the end opening is welded to the plurality of edge portions to form a weld pool, and a central plane of the weld pool is parallel to the end surface of the end opening.

Such a connection structure between the shell and the end cap formed by welding may be generally formed by means of laser welding, on the outside of the battery cell, for a gap where the end surface of the end opening abuts with the edge portion on the corresponding side. With the central plane of the weld pool being parallel to the end surface of the end opening, if the weld seam can be welded through by laser along the end surface, the protruding portion of the body portion can block the laser, so as to eliminate the risk of laser damage of the electrode assembly.

In some embodiments, the weld pool includes a first section and a second section divided by a plane where the end surface of the end opening is located, the first section being located on one side of the end surface of the end opening away from the electrode assembly, the second section being located on the other side of the end surface of the end opening close to the electrode assembly, and the volume of the first section being greater than or equal to the volume of the second section.

When the end cap is connected to the shell by means of welding, the weld pool may be closer to one side of the end cap while ensuring the connection strength, so that the first section of the weld pool above the end surface of the end opening has a larger volume, so as to reduce the influence of heat on the side plate of the shell during welding, thereby improving the structural reliability of the shell.

In an aspect of the present disclosure, a battery is provided. The battery includes: a case; and a plurality of battery cells arranged in the case, wherein at least one of the plurality of battery cells is a battery cell described above.

The battery using the battery cell described above can achieve better safety performance.

In an aspect of the present disclosure, a power consuming device is provided. The power consuming device includes a battery described above.

The power consuming device using the battery cell described above can achieve better safety performance.

### Brief Description of the Drawings

In order to explain the technical solutions in embodiments of the present disclosure more clearly, the accompanying drawings that need to be used in the embodiments of the present disclosure will be briefly described below. Obviously, the drawings described below show merely some embodiments of the present disclosure, and other drawings can be derived from these drawings by those of ordinary skill in the art without involving any inventive effort.

The present disclosure can be more clearly understood from the following detailed description with reference to the drawings, in which:
FIG. 1 is a schematic structure diagram of a power consuming device according to some embodiments of the present disclosure;
FIG. 2 is a schematic exploded diagram of a battery according to some embodiments of the present disclosure;
FIG. 3 is a schematic structure diagram of a battery cell according to some embodiments of the present disclosure;
FIG. 4 is a schematic exploded diagram of a battery cell according to some embodiments of the present disclosure;
FIG. 5 is a schematic structure diagram of a shell in FIG. 4;
FIG. 6 is a schematic diagram of cross-section A-A in FIG. 5;
FIG. 7 is a schematic enlarged view of the part corresponding to ellipse C in FIG. 6;
FIG. 8 is a schematic partial structure diagram of a battery cell according to some embodiments of the present disclosure;
FIG. 9 is a schematic diagram of cross-section B-B in FIG. 8;
FIGS. 10-12 are respectively enlarged views of several examples of the part corresponding to circle D in FIG. 9;
FIG. 13 is a schematic structure diagram of an end cap of a battery cell according to some embodiments of the present disclosure;
FIG. 14 is a schematic dimension diagram of the end cap shown in FIG. 13; and
FIG. 15 is a schematic structure diagram of a shell of a battery cell according to some embodiments of the present disclosure.

Description of reference signs:
10: battery cell; 11: weld pool; 12: pressure relief mechanism;
20: shell; 21: end opening; 231: first side plate; 231a: outer wall; 232: second side plate; 233: third side plate; 234: fourth side plate; 235: arc-shaped transition portion;
30: electrode assembly;
40: end cap; 411: first edge portion; 411a: outer side surface; 412: second edge portion; 42: body portion; 421: protruding portion;
50: battery; 51: a case; 52: bottom wall;
60: vehicle; 61: controller; 62: motor.

### Detailed Description of Embodiments

The implementations of the present disclosure will be further described in detail below with reference to the accompanying drawings and embodiments. The following detailed description of the embodiments and the accompanying drawings are used to illustrate the principle of the present disclosure by way of example, but are not intended to limit the scope of the present disclosure. That is, the present disclosure is not limited to the described embodiments.

In the description of the present disclosure, it should be noted that "a plurality of" means two or more, unless otherwise specified. The orientation or position relationship indicated by the terms "upper", "lower", "left", "right", "inner", "outer", etc. is only for the convenience of describing the present disclosure and simplifying the description, rather than indicating or implying that the apparatus or element referred to must have a particular orientation or be constructed and operated in a particular orientation, and therefore should not be construed as a limitation on the present disclosure. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the drawings, and do not limit the specific structure in the present disclosure. In the description of the present disclosure, it should be further noted that unless otherwise explicitly specified and defined, the terms "mounting", "connecting" and "connection" should be understood in a broad sense, for example, they may be a fixed connection, a detachable connection, or an integrated connection; and may be a direct connection, or an indirect connection by means of an intermediate medium. For those of ordinary skill in the art, the specific meanings of the above terms in the present disclosure can be understood according to specific circumstances.

Some implementations of the present invention will be described in detail below with reference to the accompanying drawings. The features in the following embodiments may be combined with each other without conflicts.

In some related art, a shell of a battery cell includes side walls with different thicknesses, and a thicker side wall has relatively higher strength and stiffness than a thinner side wall, and can withstand worse stress conditions, or the thicker side wall can meet specific working condition requirements. When such a shell is welded to an end cap, there is a certain difference in the effect of welding the side walls with different thicknesses to different parts of the end cap, which may affect the welding quality, so as to affect the reliability of connection between the shell and the end cap and further reduce the safety of the battery cell.

In view of this, the embodiments of the present disclosure provide a battery cell, a battery, and a power consuming device, which can improve the safety of the battery in use.

The battery cell according to the embodiments of the present disclosure may include a lithium-ion secondary battery, a lithium-ion primary battery, a lithium-sulfur battery, a sodium/lithium-ion battery, a sodium-ion battery or a magnesium-ion battery, etc., which is not limited in embodiments of the present disclosure. The battery cell refers to the smallest unit that constitutes a battery. The battery cell include an electrode assembly that can undergo an electrochemical reaction. The battery cell may be cylindrical, flat, rectangular, or in other shapes. When the battery cell is placed in a conventional manner, a terminal of the battery cell is located above, laterally or below, which is not limited in the embodiments of the present disclosure.

The battery cell according to the embodiments of the present disclosure can be applied to various types of batteries. The battery may be configured to supply power to a power consuming device such as a vehicle, for example, providing a power supply for vehicle control or a power supply for vehicle driving. The battery may include a case and multiple battery cells. The multiple battery cells connected in series, in parallel or in series-parallel may form a battery module. The case may provide an accommodating space for the battery cells or the battery module.

The battery according to the embodiments of the present disclosure can be applied to various types of power consuming devices using a battery. The power consuming device may be, for example, a mobile phone, a portable device, a laptop, an electric moped, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The power consuming devices described above are not specially limited in the embodiments of the present disclosure.

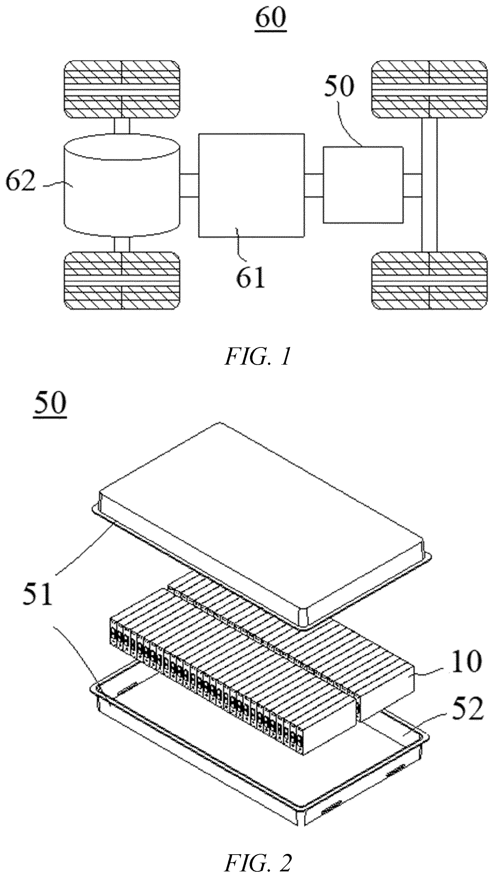

FIG. 1 is a schematic structure diagram of a power consuming device according to some embodiments of the present disclosure. For ease of description, an example in which the power consuming device is a vehicle is taken for description. Referring to FIG. 1, a vehicle 60 may be a fuel vehicle, a gas vehicle, or a new energy vehicle. The new energy vehicle may be a battery electric vehicle or a hybrid electric vehicle, etc. A battery 50 may be arranged at the bottom, the head or the tail of the vehicle 60.

The battery 50 may be configured to supply power to the vehicle 60. For example, the battery 50 can serve as an operation power supply of the vehicle 60 for use in a circuit system of the vehicle 60, for example, to meet working power requirements during startup, navigation and running of the vehicle 60. The battery 50 may not only serve as the operation power supply of the vehicle 60, but also serve as a driving power supply of the vehicle 60, replacing or partially replacing fuel or natural gas to provide driving power for the vehicle 60.

An axle, wheels, a motor 62 and a controller 61 may also be arranged inside the vehicle 60. The controller 61 is configured to control the battery 50 to supply power to the motor. For example, when the vehicle 60 uses the battery 50 as a driving power supply, the controller 61 can provide the motor 62 with power required for constant-speed travel and acceleration. The motor 62 is configured to drive the axle to rotate to drive the wheels to rotate.

FIG. 2 is a schematic exploded diagram of a battery according to some embodiments of the present disclosure. Referring to FIG. 2, in some embodiments, the battery 50 includes a case 51 and one or more battery cells 10 arranged in the case 51. The case 51 may be made of metal, can accommodate the battery cell 10 and provide cooling, sealing, anti-collision and other functions for the battery cell 10, and can further avoid the adverse effect of a liquid or other foreign matters on the charging and discharging or the safety of the battery cell.

In FIG. 2, the battery cells 10 may be electrically connected to each other in series, in parallel or in series-parallel to achieve required electrical performance parameters of the battery 50. Multiple battery cells 50 are arranged in rows, and one or more rows of battery cells 10 may be arranged in the case as desired.

In some embodiments, the battery cells 10 of the battery 50 may be arranged in at least one of a length direction and a width direction of the case 51. At least one row or one column of battery cells 50 may be arranged according to actual needs. One or more layers of battery cells 10 may also be arranged in a height direction of the battery 50 as desired.

In some embodiments, multiple battery cells 10 may be connected in series, in parallel or in series-parallel to form a battery module, and then multiple battery modules are connected in series. in parallel or in series-parallel to form a whole and are accommodated inside the case 51. In some other embodiments, all battery cells 10 are directly connected together in series, in parallel or in series-parallel, and then a unit composed of all the battery cells 10 is accommodated in the case 51.

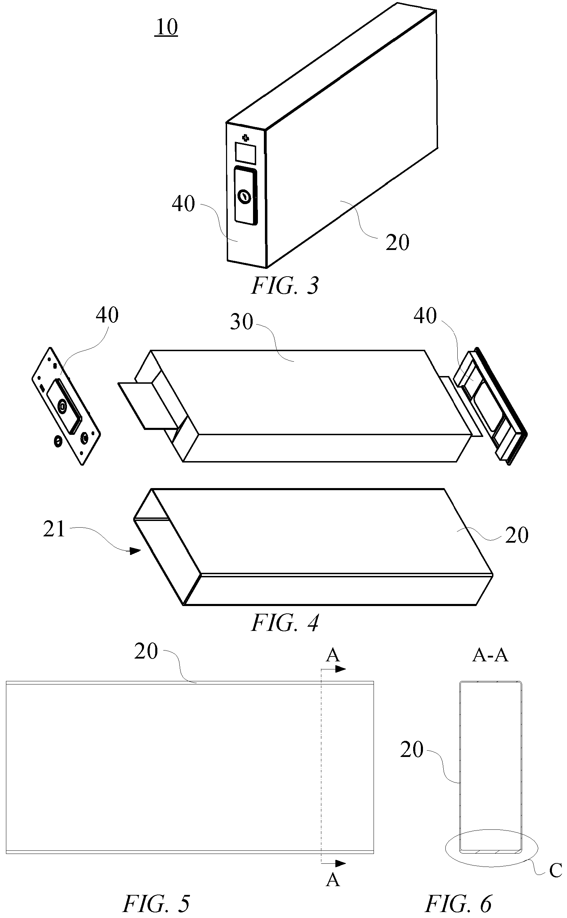

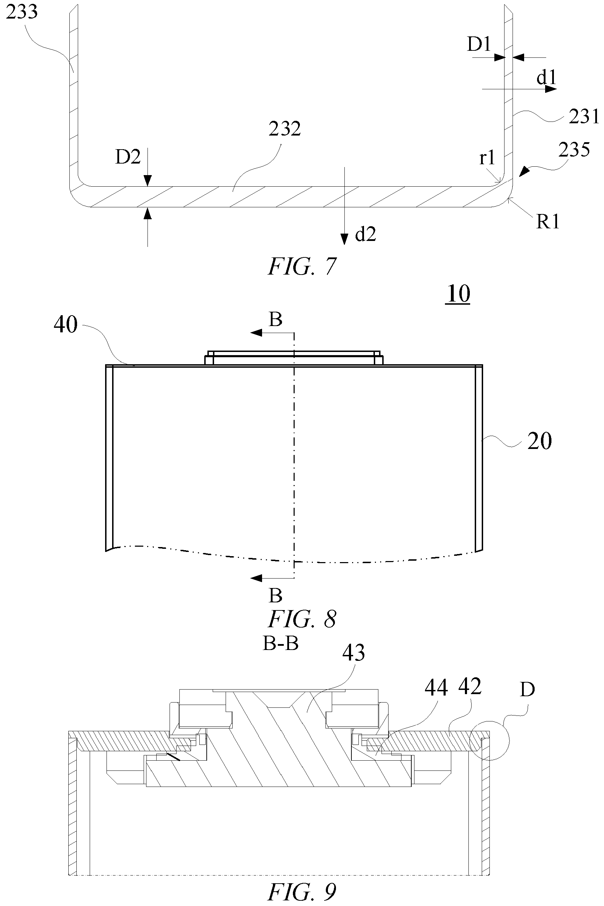

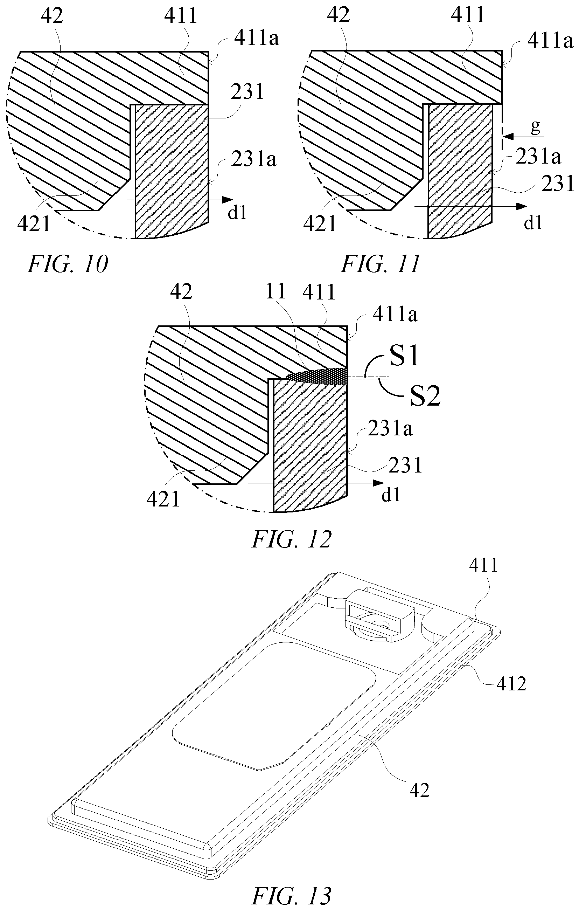

FIG. 3 is a schematic structure diagram of a battery cell according to some embodiments of the present disclosure. FIG. 4 is a schematic exploded diagram of a battery cell according to some embodiments of the present disclosure. FIG. 5 is a schematic structure diagram of a shell in FIG. 4. FIG. 6 is a schematic diagram of cross-section A-A in FIG. 5. FIG. 7 is a schematic enlarged view of the part corresponding to ellipse C in FIG. 6. FIG. 8 is a schematic partial structure diagram of a battery cell according to some embodiments of the present disclosure. FIG. 9 is a schematic diagram of cross-section B-B in FIG. 8. FIGS. 10-12 are respectively enlarged views of several examples of the part corresponding to circle D in FIG. 9.

Referring to FIGS. 3-12, in some embodiments, the battery cell 10 includes: a shell 20, an electrode assembly 30, and an end cap 40. The shell 20 includes multiple side plates that enclose an end opening 21 of the shell 20. The electrode assembly 30 is arranged in the shell 20. The end cap 40 is arranged at the end opening 21. The end cap 40 includes multiple edge portions, which are fixedly connected to an end surface of the end opening 21 and respectively correspond to the multiple side plates. The multiple side plates include a first side plate 231 and a second side plate 232 with different thicknesses.

The multiple edge portions include a first edge portion 411 corresponding to the first side plate 231 and a second edge portion 412 corresponding to the second side plate 232. An outer wall 231a of the first side plate 231 is substantially flush with an outer side surface 411a of the first edge portion 411 in a thickness direction of the first side plate 231, and an outer wall of the second side plate 232 is substantially flush with an outer side surface of the second edge portion 412 in a thickness direction of the second side plate 232.

In this embodiment, the shell 20 of the battery cell 10 can satisfy specific requirements of the battery cell 10 by means of the side plates with different thicknesses. For example, the requirement for vibration resistance or impact resistance can be satisfied by means of a thicker side plate, so that the corresponding surface of the battery cell 10 is not prone to deformation or damage, thereby improving the reliability of the electrode assembly 30 in the shell 20. The side plates on other side surfaces can be thinned as desired, so as to reduce the weight of the shell 20 and increase the available space in the shell 20, so that a larger electrode assembly can be used, and thus the capacity of the battery cell can be further improved.

For the first side plate and the second side plate with different thicknesses, the outer wall of each side plate is substantially flush with the outer side surface of the corresponding edge portion in the corresponding thickness direction, which can meet quality requirements during welding of the outer wall of the side plate to the outer side surface of the edge portion, ensure reliable connection between the shell and the end cap, improve the safety of the battery cell in use, and solve the problem that the welding cannot be performed or the welding quality cannot meet the requirements due to a large distance between the outer wall of the side plate and the outer side surface of the edge portion.

In this embodiment, for the situation in which the outer wall 231a of the first side plate 231 is substantially flush with the outer side surface 411a of the first edge portion 411 while the outer wall of the second side plate 232 is substantially flush with the outer side surface of the second edge portion 412, the outer wall of the side plate and the outer side surface of the corresponding edge portion may be coplanar without a distance therebetween, or may be located in different planes with a small distance g therebetween.

The multiple side plates of the shell 20 enclose an internal chamber of the shell 20 that can accommodate the electrode assembly 30. The end opening 21 may be arranged on at least one end of the shell 20 and in communication with the internal chamber of the shell 20. The shell 20 may be shaped according to the shape of one or more electrode assemblies 30. The shell 20 may be a hollow cuboid, a hollow cube, or a hollow cylinder, etc. The shell 20 may be made of electrically conductive metal or plastic. Optionally, the shell 20 is made of aluminum or an aluminum alloy.

The end cap 40 is arranged at the end opening 21, and is configured to form a closed cavity with the shell 20 for accommodating the electrode assembly 30. At least one terminal 43 may be arranged on the end cap 40, and the terminal 43 is fixedly arranged on the end cap 40 by means of a sealing member 44 and electrically connected to a tab of the corresponding polarity on the electrode assembly 30.

The electrode assembly 30 may include a positive electrode plate, a negative electrode plate, and a separator located between the positive electrode plate and the negative electrode plate. The battery cell works by means of internal metal ions moving between the positive electrode plate and the negative electrode plate.

The positive electrode plate includes a positive current collector and a positive active material layer. A positive electrode tab is connected to or formed on the positive current collector. Taking a lithium-ion battery as an example, the positive current collector may be made of aluminum, and the positive active material may be a lithium compound, such as lithium cobalt oxide, lithium iron phosphate, ternary lithium or lithium manganate, which can provide lithium ions. In the case where the positive current collector is bonded to the positive active material layer by means of a bonding material, the bonding material may be polyvinylidene fluoride (PVDF), etc.

The negative electrode plate includes a negative current collector and a negative active material layer. A negative electrode tab is connected to or formed on the negative current collector. Taking a lithium-ion battery as an example, the negative current collector may be made of copper, and the negative active material may be a material, such as graphite, silicon, and lithium titanate, which can store lithium ions. In the case where the negative current collector is bonded to the negative active material layer by means of a bonding material, the bonding material may be carboxymethyl cellulose, epoxy resin, styrene-butadiene rubber, etc.

The separator may be made of polypropylene (PP) or polyethylene (PE), etc. An electrolytic solution includes an electrolyte and a solvent. The electrolyte is an organic metal salt, an inorganic salt, etc., which can provide metal ions that shuttle between the positive electrode plate and the negative electrode plate. In order to ensure the sufficient overcurrent capability, multiple positive electrode tabs may be provided and are stacked together, and multiple negative electrode tabs may be provided and are stacked together. In addition, the electrode assembly may be of a wound structure or a laminated structure, which is not limited in the embodiments of the present disclosure.

FIG. 7 shows thickness directions d1 and d2 of two side plates with different thicknesses. The thickness direction may be a normal direction of an outer wall or an inner wall of the corresponding side plate. According to the shape of the shell and the distribution positions of the side plates with different thicknesses, the thickness directions d1 and d2 may be parallel to each other or form a certain included angle, such as 60° or 90°.

Referring to FIG. 11, in some embodiments, a distance between the outer wall 231a of the first side plate 231 and the outer side surface 411a of the first edge portion 411 is less than 0.8 mm, and/or a distance between the outer wall of the second side plate 232 and the outer side surface of the second edge portion 412 is less than 0.8 mm. For the different side plates, allowing the distance between the outer wall of each side plate and the outer side surface of the corresponding edge portion to be less than 0.8 mm can ensure the welding quality during welding to achieve reliable connection between the shell 20 and the end cap 40.

Referring to FIG. 10, in some embodiments, the outer wall 231a of the first side plate 231 is coplanar with the outer side surface 411a of the first edge portion 411, and/or the outer wall of the second side plate 232 is coplanar with the outer side surface of the second edge portion 412. For the side plates with different thicknesses, the outer wall of each side plate being coplanar with the outer side surface of the corresponding edge portion allows the outer wall of the side plate to be completely flush with the outer side surface of the edge portion (equivalent to the distance of 0 mm therebetween), which can achieve better welding quality to improve the connection reliability between the shell and the end cap.

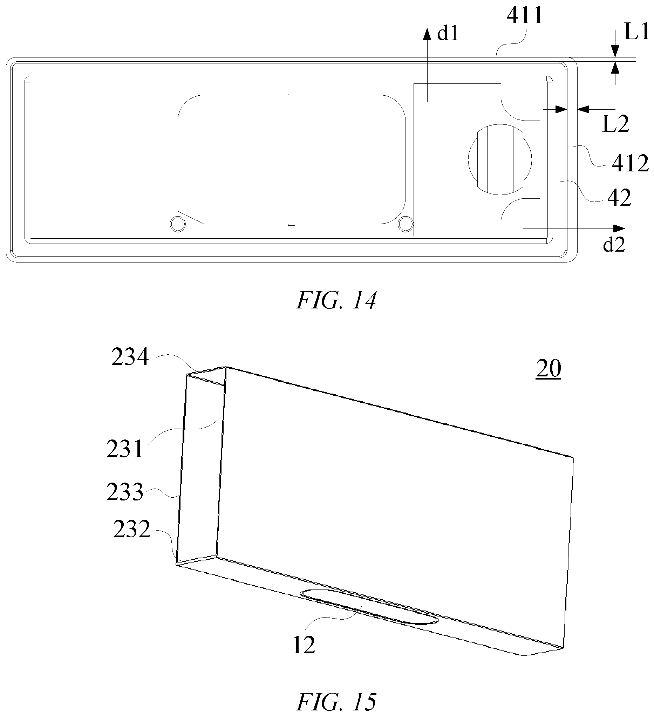

FIG. 13 is a schematic structure diagram of an end cap of a battery cell according to some embodiments of the present disclosure. FIG. 14 is a schematic dimension diagram of the end cap shown in FIG. 13. Referring to FIGS. 9, 13 and 14, in some embodiments, the end cap 40 includes a body portion 42, the multiple edge portions are located on a periphery of the body portion 42, and the body portion 42 is provided with a protruding portion 421 that protrudes relative to the multiple edge portions and is located on an inner side the end opening 21.

The protruding portion 421 of the body portion 42 may form a step structure with each edge portion, and when the protruding portion 421 is embedded in the end opening 21, the end cap 40 can be positioned in the end opening 21. The end surface of the end opening 21 overlaps the edge portions, and the body portion 42 can fit with the multiple edge portions to achieve fixed connection between the end cap 40 and the multiple side plates.

Such a connection structure between the shell and the end cap formed by welding may be generally formed by means of laser welding, on the outside of the battery cell, for a gap where the end surface of the end opening abuts with the edge portion on the corresponding side. Compared with penetration welding in a thickness direction of the end cap, when a weld seam is welded through by laser, the protruding portion of the body portion can block the laser so as to eliminate the risk of laser damage of the electrode assembly, and the battery cell can be rotated relative to a laser welding gun to form the entire weld seam during welding, thereby achieving higher welding efficiency.

Referring to FIG. 12, in some embodiments, the end surface of the end opening 21 is welded to the multiple edge portions to form a weld pool 11, and a central plane S2 of the weld pool 11 is parallel to the end surface of the end opening 21.

Such a connection structure between the shell and the end cap formed in a welding manner may be formed by welding a gap where the end surface of the end opening 21 abuts with the edge portion on the corresponding side by means of laser that is emitted by a laser welding gun located on the outside of the battery cell 10. Compared with penetration welding in the thickness direction of the end cap 40 (i.e., the vertical direction in FIG. 12), the central plane S1 of the weld pool is parallel to the end surface of the end opening 21, if the weld seam is welded through by laser along the end surface, the protruding portion of the body portion can block the laser, so as to eliminate the risk of laser damage of the electrode assembly. Moreover, the battery cell 10 can be rotated relative to the laser welding gun to form the entire weld seam during welding, thereby achieving higher welding efficiency.

The weld pool 11 includes a first section and a second section divided by a plane S2 where the end surface of the end opening 21 is located, the first section being located on one side of the end surface of the end opening 21 away from the electrode assembly 30, the second section being located on the other side of the end surface of the end opening 21 close to the electrode assembly 30, and the volume of the first section being greater than or equal to the volume of the second section.

When the end cap is connected to the shell by means of welding, the weld pool may be closer to one side of the end cap while ensuring the connection strength, so that the first section of the weld pool above the end surface of the end opening has a larger volume, so as to reduce the influence of heat on the side plate of the shell during welding, thereby improving the structural reliability of the shell.

Referring to FIG. 14, in some embodiments, the first edge portion 411 protrudes relative to the protruding portion 421 by a distance of L1 in the thickness direction of the first side plate 231, and the second edge portion 412 protrudes relative to the protruding portion 421 by a distance of L2 in the thickness direction of the second side plate 232. L1 and L2 satisfy L1 ≠ L2.

In the step structure formed by the edge portions and the protruding portion of the body portion, the distance L1 by which the first edge portion protrudes relative to the protruding portion is not equal to the distance L2 by which the second edge portion protrudes relative to the protruding portion, so that when the end cap is assembled to the shell, it can more convenient to design different protruding distances matching different thicknesses of the side plates, so as to meet, for example, the requirement of achieving the effect of the outer walls of the side plates with different thicknesses being substantially flush with the outer side surfaces of the edge portions.

In FIG. 14, the thickness D1 of the first side plate 231 is less than the thickness D2 of the second side plate 232, and L1 corresponding to the thicker second side plate 232 is less than L2 corresponding to the thinner first side plate 231. The distance by which the edge portion protrudes relative to the protruding portion is equivalent to the width of a step surface of the step structure. For a side plate with a larger thickness, using a larger protruding distance can achieve a larger size of lap joint between the end surface of the side plate and the edge portion on this side, and can allow the outer wall of the side plate on this side to be more flush with the outer side surface of the corresponding edge portion, so as to meet the requirement of quality during welding of the outer wall of the side plate to the outer side surface of the edge portion to ensure reliable connection between the shell and the end cap, thereby improving the safety of the battery cell in use.

In some other embodiments, the distances between the protruding portion and the outer side surfaces of the edge portions may be the same in the respective thickness directions of the side plates, provided that the distance g between the outer wall of the side plate and the outer side surface of the corresponding edge portion in the thickness direction is less than a preset size to allow the outer wall of the side plate to be substantially flush with the outer side surface of the corresponding edge portion.

Referring to FIG. 7, in some embodiments, the first side plate 231 and the second side plate 232 are adjacent to each other. The thickness D1 of the first side plate 231 is less than the thickness D2 of the second side plate 232, and the adjacent parts of the first side plate 231 and the second side plate 232 form an arc-shaped transition portion 235. The arc-shaped transition portion 235 may be extruded together with the first side plate 231 and the second side plate 232 by means of an extrusion molding process. The fillet radius r1 of the arc-shaped transition portion 235 may be greater than or equal to the thickness D1 of the first side plate 231, and the round radius R1 of the arc-shaped transition portion 235 may be greater than or equal to the thickness D1 of the first side plate 231.

For the side plates which have different thicknesses and are adjacent to each other, when the extrusion molding process is used, allowing both the fillet radius and the round radius of the arc-shaped transition portion 235 between the adjacent side plates to be greater than or equal to the thickness of the thinner first side plate 231 can improve the material fluidity and the strength of the shell 20 during the profile extrusion.

In some embodiments, the thickness D1 of the first side plate 231 satisfies D1 ≥ 0.3 mm. If the thickness of the side plate is too small, during the extrusion molding process, the material flows at an uneven velocity, which makes it difficult to form a side plate profile with a uniform thickness. Therefore, allowing the thickness of the thinner first side plate 231 to be greater than or equal to 0.3 mm can satisfy the manufacturability of the first side plate 231 during the extrusion molding process.

Optionally, the thickness D1 of the first side plate 231 satisfies 0.3 mm ≤ D1 ≤ 2 mm. If the thickness of the side plate is too large, the shell 20 needs to be made of more materials, is heavier, and occupies a larger thickness of the battery cell, which affects the size of the electrode assembly 30 and thus affects the capacity of the battery cell. Therefore, by means of further defining the thickness of the first side plate 231 to be greater than or equal to 0.3 mm and less than or equal to 2 mm, it is possible to use less and lighter material and allow the battery cell to have greater capacity while satisfying the manufacturability of the first side plate 231 during the extrusion molding process.

Referring to FIG. 7, in some embodiments, the thickness D1 of the first side plate 231 and the thickness D2 of the second side plate 232 satisfy D1 < D2 ≤ 4 * D1. If the difference between the thickness of the thicker second side plate and the thickness of the thinner first side plate is too large, there may be a problem of tear of interface of the first side plate 231 and the second side plate 232 due to uneven material flowing or excessive difference of flow velocity during the extrusion molding process. Therefore, allowing the thickness of the second side plate 232 to be greater than the thickness of the first side plate 231 but not greater than four times the thickness of the first side plate 231 can improve the extrusion molding effect while satisfying the thickness relationship between the side plates.

For the arc-shaped transition portion 235 between the first side plate 231 and the second side plate 232, the fillet radius that is too small leads to an excessive curvature, which affects the fluidity of the material during the extrusion molding process, and is likely to cause uneven thickness of the material because the material does not flow in a timely manner, resulting in the appearance of wavy lines and even rupture to generate cracks. The fillet radius r1 that is too large may cause the arc-shaped transition portion 235 to occupy a large space in the shell 20, which interferes with the mounting of the electrode assembly 30. Therefore, in some embodiments, the fillet radius r1 satisfies 0.4 mm ≤ r1 ≤ 2.5 mm. Allowing the fillet radius r1 to satisfy 0.4 mm ≤ r1 ≤ 2.5 mm can improve the material fluidity during the extrusion molding process and facilitate the mounting of the electrode assembly 30.

For the arc-shaped transition portion 235 between the first side plate 231 and the second side plate 232, the round radius that is too large causes a rounded corner to be too flat and thus closer to a filleted corner, which makes the arc-shaped transition portion 235 thinner and thus affects the strength of this part. The filleted corner that is too small may cause the arc-shaped transition portion to be too thick or too sharp, so that the flow velocity of the material cannot be easily controlled during extrusion molding, and the flow is uneven, which is likely to cause defects such as fish-scale lines or cracks. Therefore, in some embodiments, the fillet radius r1 and the round radius R1 satisfy r1 + D1 ≤ R1 ≤ r1 + D2. The fillet radius r1 and the round radius R1 satisfying r1 + D1 ≤ R1 ≤ r1 + D2 can improve the strength of the arc-shaped transition portion 235 of the shell 20.

In the embodiments described above, the shell 20 may be formed by means of the extrusion molding process. For making the shell 20, the extrusion molding process has a lower cost and higher efficiency and yield. In some other embodiments, the shell 20 may also be made by means of other processes, such as bending and welding a metal plate into a shell.

FIG. 15 is a schematic structure diagram of a shell of a battery cell according to some embodiments of the present disclosure. Referring to FIGS. 2, 4-6 and 15, in some embodiments, the shell 20 is a square tube, and the multiple side plates further include a third side plate 233 and a fourth side plate 234, the first side plate 231 being opposite to the third side plate 233, and the second side plate 232 being opposite to the fourth side plate 234. The first side plate 231 and the third side plate 233 are both connected between the second side plate 232 and the fourth side plate 234. The second side plate 232 is configured to be mounted on a bottom wall 52 of a case 51 of a battery 50. The thickness of the second side plate 232 is greater than the thickness of the first side plate 231 and greater than the thickness of the third side plate 233, and the thickness of the second side plate 232 is greater than or equal to the thickness of the fourth side plate 234.

The second side plate 232 and the fourth side plate 234 are respectively equivalent to a bottom plate and a top plate of the shell 20, and the first side plate 231 and the third side plate 233 are equivalent to two opposite vertical plates located between the bottom plate and the top plate. For a square battery cell 10 mounted on the bottom wall of the battery case 51, the bottom plate of the battery cell may be subjected to certain vibration and impact during use, and allowing the bottom plate to be thicker can reduce the risk of deformation or damage when the bottom plate is subjected to vibration and impact, improving the reliability of the electrode assembly 30 within the battery cell 10 and prolonging the service life of the battery cell 10.

For an embodiment in which the bottom plate and the top plate have the same thickness, allowing the top plate 23a and the bottom plate 23b opposite to each other to have the same thickness can maintain the uniformity during flowing of material on upper and lower sides, which is conducive to elimination of uneven thickness or cracks caused by inconsistent flow velocities. For an embodiment in which the bottom plate is thicker than the top plate, allowing the thickness of the bottom plate 23b to be greater than that of the top plate 23a can correspondingly reduce the weight and material usage amount of the shell 20 and improve the volume of internal space of the shell 20 while reducing the risk of deformation or damage of the bottom plate 23b when the bottom plate 23b is subjected to vibration and impact, which is conducive to improvement of the energy density of the battery cell 10.

In some embodiments, the thickness of the first side plate 231 is equal to the thickness of the third side plate 233. For the extrusion molding process, allowing the two vertical plates opposite to each other to have the same thickness can maintain the uniformity of material flowing on left and right sides, which is conducive to elimination of uneven thickness or cracks caused by inconsistent flow velocities.

In some embodiments, the thickness of the fourth side plate 234 is greater than the thickness of the first side plate 231 and greater than the thickness of the third side plate 233. Allowing the thickness of the top plate to be greater than that of the two vertical plate can minimize the deformation and damage of the top plate when the battery is abnormal, for example, when the internal pressure of the battery is too high.

In FIG. 15, the battery cell 10 further includes a pressure relief mechanism 12, such as an explosion-proof valve, arranged on the second side plate 232. The pressure relief mechanism 12 can be actuated when the internal gas pressure of the shell 20 reaches a threshold to release the pressure, thereby ensuring the safety performance of the battery cell 10. A thicker second side plate 232 can increase the area of connection between the pressure relief mechanism 12 and the second side plate 232, so as to strengthen the support for the pressure relief mechanism 12 to prevent the damage of a pressure relief valve due to insufficient connection strength and the like, thereby improving the safety performance of the battery cell 10.

Based on the embodiments of the battery cell of the present disclosure described above, referring to FIG. 2, an embodiment of the present disclosure further provides a battery, including a case 51 and multiple battery cells 10 arranged in the case 51. At least one battery cell 10 in the multiple battery cells 10 is a battery cell 10 according to the embodiments described above. The battery using the battery cell 10 described above can achieve better safety in use.

In an aspect of the present disclosure, a power consuming device is provided. The power consuming device includes a battery described above. The power consuming device using the battery described above can achieve better safety in use.

## Claims

1. A battery cell (10), comprising:
a shell (20) comprising a plurality of side plates that enclose an end opening (21) of the shell (20);
an electrode assembly (30) arranged in the shell (20), wherein the shell (20) is formed by means of an extrusion molding process; and
an end cap (40) arranged at the end opening (21), the end cap (40) comprising a plurality of edge portions that are fixedly connected to an end surface of the end opening (21) and respectively correspond to the plurality of side plates,
wherein the plurality of side plates include a first side plate (231) and a second side plate (232) with different thicknesses, and the plurality of edge portions include a first edge portion (411) corresponding to the first side plate (231) and a second edge portion (412) corresponding to the second side plate (232); and an outer wall (231a) of the first side plate (231) is substantially flush with an outer side surface (411a) of the first edge portion (411) in a thickness direction of the first side plate (231), and an outer wall of the second side plate (232) is substantially flush with an outer side surface of the second edge portion (412) in a thickness direction of the second side plate (232), wherein the first side plate (231) and the second side plate (232) are adjacent to each other, the thickness D1 of the first side plate (231) is less than the thickness D2 of the second side plate (232), adjacent parts of the first side plate (231) and the second side plate (232) form an arc-shaped transition portion (235), the fillet radius r1 of the arc-shaped transition portion (235) is greater than or equal to the thickness D1 of the first side plate (231), and the round radius R1 of the arc-shaped transition portion (235) is greater than or equal to the thickness D1 of the first side plate (231).

2. The battery cell (10) according to claim 1, wherein a distance between the outer wall (231a) of the first side plate (231) and the outer side surface (411a) of the first edge portion (411) is less than 0.8 mm, and/or a distance between the outer wall of the second side plate (232) and the outer side surface of the second edge portion (412) is less than 0.8 mm.

3. The battery cell (10) according to claim 2, wherein the outer wall (231a) of the first side plate (231) is coplanar with the outer side surface (411a) of the first edge portion (411), and/or the outer wall of the second side plate (232) is coplanar with the outer side surface of the second edge portion (412).

4. The battery cell according to claim 1, wherein the end cap (40) comprises a body portion (42), the plurality of edge portions are located on a periphery of the body portion (42), and the body portion (42) is provided with a protruding portion (421) protruding relative to the plurality of edge portions and located on an inner side the end opening (21).

5. The battery cell according to claim 4, wherein the first edge portion (411) protrudes relative to the protruding portion (421) by a distance of L1 in the thickness direction of the first side plate (231), and the second edge portion (412) protrudes relative to the protruding portion (421) by a distance of L2 in the thickness direction of the second side plate (232), L1 and L2 satisfying L1 ≠ L2.

6. The battery cell according to claim 5, wherein the thickness D1 of the first side plate (231) is less than the thickness D2 of the second side plate (232), L1 and L2 satisfying L1 < L2.

7. The battery cell (10) according to claim 1, wherein the thickness D1 of the first side plate (231) satisfies D1 ≥ 0.3 mm;
preferably,
the thickness D1 of the first side plate (231) satisfies 0.3 mm ≤ D1 ≤ 2 mm.

8. The battery cell (10) according to claim 1, wherein the thickness D1 of the first side plate (231) and the thickness D2 of the second side plate (232) satisfy D1 < D2 ≤ 4 * D1;
or
the fillet radius r1 satisfies 0.4 mm ≤ r1 ≤ 2.5 mm;
or
the fillet radius r1 and the round radius R1 satisfy r1 + D1 ≤ R1 ≤ r1 + D2.

9. The battery cell (10) according to claim 1, wherein the shell (20) is a square tube, the plurality of side plates further include a third side plate (233) and a fourth side plate (234), the first side plate (231) is opposite to the third side plate (233), the second side plate (232) is opposite to the fourth side plate (234), the first side plate (231) and the third side plate (233) are both connected between the second side plate (232) and the fourth side plate (234), the second side plate (232) is configured to be mounted on a bottom wall (52) of a case (51) of a battery (50), the thickness of the second side plate (232) is greater than the thickness of the first side plate (231) and greater than the thickness of the third side plate (233), and the thickness of the second side plate (232) is greater than or equal to the thickness of the fourth side plate (234).

10. The battery cell (10) according to claim 9, wherein the thickness of the first side plate (231) is equal to the thickness of the third side plate (233);
or
the thickness of the fourth side plate (234) is greater than the thickness of the first side plate (231) and greater than the thickness of the third side plate (233);
or
further comprising:
a pressure relief mechanism (12) arranged on the second side plate (232).

11. The battery cell (10) according to claim 4, wherein the end surface of the end opening (21) is welded to the plurality of edge portions to form a weld pool (11), and a central plane (S1) of the weld pool (11) is parallel to the end surface of the end opening (21);
preferably,
the weld pool (11) comprises a first section and a second section divided by a plane (S2) where the end surface of the end opening (21) is located, the first section being located on one side of the end surface of the end opening (21) away from the electrode assembly (30), the second section being located on the other side of the end surface of the end opening (21) close to the electrode assembly (30), and the volume of the first section being greater than or equal to the volume of the second section.

12. A battery (50), comprising:
a case (51); and
a plurality of battery cells (10) arranged in the case (51),
wherein at least one battery cell (10) in the plurality of battery cells (10) is a battery cell (10) according to any one of claims 1-11.

13. A power consuming device, comprising: a battery (50) according to claim 12.

## Patentansprüche

1. Batteriezelle (10), Folgendes umfassend:
eine Ummantelung (20), umfassend mehrere Seitenplatten, die eine Endöffnung (21) der Ummantelung (20) umschließen;
eine Elektrodenanordnung (30), die in der Ummantelung (20) angeordnet ist, wobei die Ummantelung (20) mittels eines Strangpressvorgangs ausgebildet ist; und
eine Endkappe (40), die an der Endöffnung (21) angeordnet ist, wobei die Endkappe (40) mehrere Kantenabschnitte umfasst, die mit einer Endfläche der Endöffnung (21) fest verbunden sind und jeweils den mehreren Seitenplatten entsprechen,
wobei die mehreren Seitenplatten eine erste Seitenplatte (231) und eine zweite Seitenplatte (232) mit einer anderen Dicke umfassen und die mehreren Kantenabschnitte einen der ersten Seitenplatte (231) entsprechenden ersten Kantenabschnitt (411) und einen der zweiten Seitenplatte (232) entsprechenden zweiten Kantenabschnitt (412) umfassen; und wobei eine Außenwand (231a) der ersten Seitenplatte (231) mit einer Außenseitenfläche (411a) des ersten Kantenabschnitts (411) in Dickenrichtung der ersten Seitenplatte (231) im Wesentlichen bündig ist und wobei eine Außenwand der zweiten Seitenplatte (232) mit einer Außenseitenfläche des zweiten Kantenabschnitts (412) in Dickenrichtung der zweiten Seitenplatte (232) im Wesentlichen bündig ist, wobei die erste Seitenplatte (231) und die zweite Seitenplatte (232) aneinander angrenzen, wobei die Dicke D1 der ersten Seitenplatte (231) kleiner als die Dicke D2 der zweiten Seitenplatte (232) ist, wobei angrenzende Teile der ersten Seitenplatte (231) und der zweiten Seitenplatte (232) einen bogenförmigen Übergangsabschnitt (235) ausbilden, wobei der Hohlkehlenradius r1 des bogenförmigen Übergangsabschnitts (235) größer als die oder gleich der Dicke D1 der ersten Seitenplatte (231) ist und der Rundungsradius R1 des bogenförmigen Übergangsabschnitts (235) größer als die oder gleich der Dicke D1 der ersten Seitenplatte (231) ist.

2. Batteriezelle (10) nach Anspruch 1, wobei der Abstand zwischen der Außenwand (231a) der ersten Seitenplatte (231) und der Außenseitenfläche (411a) des ersten Kantenabschnitts (411) kleiner als 0,8 mm ist und/oder der Abstand zwischen der Außenwand der zweiten Seitenplatte (232) und der Außenseitenfläche des zweiten Kantenabschnitts (412) kleiner als 0,8 mm ist.

3. Batteriezelle (10) nach Anspruch 2, wobei die Außenwand (231a) der ersten Seitenplatte (231) mit der Außenseitenfläche (411a) des ersten Kantenabschnitts (411) komplanar ist und/oder die Außenwand der zweiten Seitenplatte (232) mit der Außenseitenfläche des zweiten Kantenabschnitts (412) komplanar ist.

4. Batteriezelle nach Anspruch 1, wobei die Endkappe (40) einen Körperabschnitt (42) umfasst, wobei sich die mehreren Kantenabschnitte auf einem Rand des Körperabschnitts (42) befinden und der Körperabschnitt (42) mit einem vorstehenden Abschnitt (421) versehen ist, der in Bezug zu den mehreren Kantenabschnitten vorsteht und sich auf einer Innenseite der Endöffnung (21) befindet.

5. Batteriezelle nach Anspruch 4, wobei der erste Kantenabschnitt (411) in Bezug zum vorstehenden Abschnitt (421) in einem Abstand L1 in Dickenrichtung der ersten Seitenplatte (231) vorsteht und der zweite Kantenabschnitt (412) in Bezug zum vorstehenden Abschnitt (421) in einem Abstand L2 in Dickenrichtung der zweiten Seitenplatte (232) vorsteht, wobei L1 und L2 folgende Bedingung erfüllen: L1 ≠ L2.

6. Batteriezelle nach Anspruch 5, wobei die Dicke D1 der ersten Seitenplatte (231) kleiner ist als die Dicke D2 der zweiten Seitenplatte (232), wobei L1 und L2 folgende Bedingung erfüllen: L1 < L2.

7. Batteriezelle (10) nach Anspruch 1, wobei die Dicke D1 der ersten Seitenplatte (231) folgende Bedingung erfüllt: D1 ≥ 0,3 mm;
vorzugsweise
wobei die Dicke D1 der ersten Seitenplatte (231) folgende Bedingung erfüllt: 0,3 mm ≤ D1 ≤ 2 mm.

8. Batteriezelle (10) nach Anspruch 1, wobei die Dicke D1 der ersten Seitenplatte (231) und die Dicke D2 der zweiten Seitenplatte (232) folgende Bedingung erfüllen: D1 < D2 ≤ 4*D1
oder
wobei der Hohlkehlenradius r1 folgende Bedingung erfüllt: 0,4 mm ≤ r1 ≤ 2,5 mm
oder
wobei der Hohlkehlenradius r1 und der Rundungsradius R1 folgende Bedingung erfüllen: r1 + D1 ≤ R1 ≤ r1 + D2.

9. Batteriezelle (10) nach Anspruch 1, wobei die Ummantelung (20) ein quadratisches Rohr ist, wobei die mehreren Seitenplatten ferner eine dritte Seitenplatte (233) und eine vierte Seitenplatte (234) umfassen, wobei die erste Seitenplatte (231) der dritten Seitenplatte (233) entgegengesetzt ist, wobei die zweite Seitenplatte (232) der vierten Seitenplatte (234) entgegengesetzt ist, wobei die erste Seitenplatte (231) und die dritte Seitenplatte (233) beide zwischen der zweiten Seitenplatte (232) und der vierten Seitenplatte (234) verbunden sind, wobei die zweite Seitenplatte (232) dazu ausgelegt ist, an einer Bodenwand (52) eines Gehäuses (51) einer Batterie (50) montiert zu sein, wobei die Dicke der zweiten Seitenplatte (232) größer als die Dicke der ersten Seitenplatte (231) und größer als die Dicke der dritten Seitenplatte (233) ist und die Dicke der zweiten Seitenplatte (232) größer als die oder gleich der Dicke der vierten Seitenplatte (234) ist.

10. Batteriezelle (10) nach Anspruch 9, wobei die Dicke der ersten Seitenplatte (231) gleich der Dicke der dritten Seitenplatte (233) ist
oder
wobei die Dicke der vierten Seitenplatte (234) größer als die Dicke der ersten Seitenplatte (231) und größer als die Dicke der dritten Seitenplatte (233) ist
oder
ferner umfassend:
einen Druckentlastungsmechanismus (12), der an der zweiten Seitenplatte (232) angeordnet ist.

11. Batteriezelle (10) nach Anspruch 4, wobei die Endfläche der Endöffnung (21) mit den mehreren Kantenabschnitten verschweißt ist, um ein Schweißbad (11) auszubilden, und eine Mittelebene (S1) des Schweißbads (11) parallel zur Endfläche der Endöffnung (21) ist; vorzugsweise
wobei das Schweißbad (11) einen ersten Abschnitt und einen zweiten Abschnitt umfasst, die an einer Stelle, an der sich die Endfläche der Endöffnung (21) befindet, durch eine Ebene (S2) getrennt sind, wobei sich der erste Abschnitt auf einer von der Elektrodenanordnung (30) abgewandten Seite der Endfläche der Endöffnung (21) befindet, wobei sich der zweite Abschnitt auf der anderen Seite der Endfläche der Endöffnung (21) Nahe der Elektrodenanordnung (30) befindet und das Volumen des ersten Abschnitts größer als das oder gleich dem Volumen des zweiten Abschnitts ist.

12. Batterie (50), Folgendes umfassend:
ein Gehäuse (51) und
mehrere Batteriezellen (10), die in dem Gehäuse (51) angeordnet sind,
wobei mindestens eine Batteriezelle (10) in den mehreren Batteriezellen (10) eine Batteriezelle (10) nach einem der Ansprüche 1-11 ist.

13. Stromabnehmervorrichtung, Folgendes umfassend: eine Batterie (50) nach Anspruch 12.

## Revendications

1. Élément de batterie (10), comprenant :
une enveloppe (20) comprenant une pluralité de plaques latérales qui délimitent une ouverture d'extrémité (21) de l'enveloppe (20) ;
un ensemble à électrodes (30) placé dans l'enveloppe (20), l'enveloppe (20) étant formée au moyen d'un procédé de moulage par extrusion ; et
un couvercle d'extrémité (40) placé au niveau de l'ouverture d'extrémité (21), le couvercle d'extrémité (40) comprenant une pluralité de parties de bord qui sont raccordées fixement à une surface d'extrémité de l'ouverture d'extrémité (21) et correspondent respectivement à la pluralité de plaques latérales,
dans lequel la pluralité de plaques latérales comprennent une première plaque latérale (231) et une deuxième plaque latérale (232) présentant des épaisseurs différentes, et la pluralité de parties de bord comprennent une première partie de bord (411) correspondant à la première plaque latérale (231) et une deuxième partie de bord (412) correspondant à la deuxième plaque latérale (232) ; et une paroi extérieure (231a) de la première plaque latérale (231) est sensiblement de niveau avec une surface latérale extérieure (411a) de la première partie de bord (411) dans une direction d'épaisseur de la première plaque latérale (231), et une paroi extérieure de la deuxième plaque latérale (232) est sensiblement de niveau avec une surface latérale extérieure de la deuxième partie de bord (412) dans une direction d'épaisseur de la deuxième plaque latérale (232), dans lequel la première plaque latérale (231) et la deuxième plaque latérale (232) sont adjacentes l'une à l'autre, l'épaisseur D1 de la première plaque latérale (231) est inférieure à l'épaisseur D2 de la deuxième plaque latérale (232), des portions adjacentes de la première plaque latérale (231) et de la deuxième plaque latérale (232) forment une partie de transition arquée (235), le rayon de congé r1 de la partie de transition arquée (235) est supérieur ou égal à l'épaisseur D1 de la première plaque latérale (231), et le rayon d'arrondi R1 de la partie de transition arquée (235) est supérieur ou égal à l'épaisseur D1 de la première plaque latérale (231).

2. Élément de batterie (10) selon la revendication 1, dans lequel une distance entre la paroi extérieure (231a) de la première plaque latérale (231) et la surface latérale extérieure (411a) de la première partie de bord (411) est inférieure à 0,8 mm, et/ou une distance entre la paroi extérieure de la deuxième plaque latérale (232) et la surface latérale extérieure de la deuxième partie de bord (412) est inférieure à 0,8 mm.

3. Élément de batterie (10) selon la revendication 2, dans lequel la paroi extérieure (231a) de la première plaque latérale (231) est coplanaire avec la surface latérale extérieure (411a) de la première partie de bord (411), et/ou la paroi extérieure de la deuxième plaque latérale (232) est coplanaire avec la surface latérale extérieure de la deuxième partie de bord (412).

4. Élément de batterie selon la revendication 1, dans lequel le couvercle d'extrémité (40) comprend une partie corps (42), la pluralité de parties de bord sont situées sur une périphérie de la partie corps (42), et la partie corps (42) est pourvue d'une partie saillante (421) faisant saillie relativement à la pluralité de parties de bord et située sur un côté intérieur de l'ouverture d'extrémité (21).

5. Élément de batterie selon la revendication 4, dans lequel la première partie de bord (411) fait saillie relativement à la partie saillante (421) sur une distance L1 dans la direction d'épaisseur de la première plaque latérale (231), et la deuxième partie de bord (412) fait saillie relativement à la partie saillante (421) sur une distance L2 dans la direction d'épaisseur de la deuxième plaque latérale (232), L1 et L2 vérifiant L1 ≠ L2.

6. Élément de batterie selon la revendication 5, dans lequel l'épaisseur D1 de la première plaque latérale (231) est inférieure à l'épaisseur D2 de la deuxième plaque latérale (232), L1 et L2 vérifiant L1 < L2.

7. Élément de batterie (10) selon la revendication 1, dans lequel l'épaisseur D1 de la première plaque latérale (231) vérifie D1 ≥ 0,3 mm ;
de préférence,
l'épaisseur D1 de la première plaque latérale (231) vérifie 0,3 mm ≤ D1 ≤ 2 mm.

8. Élément de batterie (10) selon la revendication 1, dans lequel l'épaisseur D1 de la première plaque latérale (231) et l'épaisseur D2 de la deuxième plaque latérale (232) vérifient D1 < D2 ≤ 4 * D1 ;
ou
le rayon de congé r1 vérifie 0,4 mm ≤ r1 ≤ 2,5 mm ;
ou
le rayon de congé r1 et le rayon d'arrondi R1 vérifient r1 + D1 ≤ R1 ≤ r1 + D2.

9. Élément de batterie (10) selon la revendication 1, dans lequel l'enveloppe (20) est un tube carré, la pluralité de plaques latérales comprennent, en outre, une troisième plaque latérale (233) et une quatrième plaque latérale (234), la première plaque latérale (231) est placée en regard de la troisième plaque latérale (233), la deuxième plaque latérale (232) est placée en regard de la quatrième plaque latérale (234), la première plaque latérale (231) et la troisième plaque latérale (233) sont toutes les deux raccordées entre la deuxième plaque latérale (232) et la quatrième plaque latérale (234), la deuxième plaque latérale (232) est conçue pour être adaptée sur une paroi inférieure (52) d'un boîtier (51) d'une batterie (50), l'épaisseur de la deuxième plaque latérale (232) est supérieure à l'épaisseur de la première plaque latérale (231) et supérieure à l'épaisseur de la troisième plaque latérale (233), et l'épaisseur de la deuxième plaque latérale (232) est supérieure ou égale à l'épaisseur de la quatrième plaque latérale (234).

10. Élément de batterie (10) selon la revendication 9, dans lequel l'épaisseur de la première plaque latérale (231) est égale à l'épaisseur de la troisième plaque latérale (233) ;
ou
l'épaisseur de la quatrième plaque latérale (234) est supérieure à l'épaisseur de la première plaque latérale (231) et supérieure à l'épaisseur de la troisième plaque latérale (233) ;
ou
comprenant en outre :
un mécanisme de décompression (12) placé sur la deuxième plaque latérale (232).

11. Élément de batterie (10) selon la revendication 4, dans lequel la surface d'extrémité de l'ouverture d'extrémité (21) est soudée à la pluralité de parties de bord de façon à former un bain de fusion (11), et un plan central (S1) du bain de fusion (11) est parallèle à la surface d'extrémité de l'ouverture d'extrémité (21) ;
de préférence,
le bain de fusion (11) comprend une première section et une seconde section divisées par un plan (S2) à l'endroit où se trouve la surface d'extrémité de l'ouverture d'extrémité (21), la première section étant située sur un côté de la surface d'extrémité de l'ouverture d'extrémité (21) éloigné de l'ensemble à électrodes (30), la seconde section étant située sur l'autre côté de la surface d'extrémité de l'ouverture d'extrémité (21) proche de l'ensemble à électrodes (30), et le volume de la première section étant supérieur ou égal au volume de la seconde section.

12. Batterie (50), comprenant :
un boîtier (51) ; et
une pluralité d'éléments de batterie (10) placés dans le boîtier (51),
dans laquelle au moins un élément de batterie (10) dans la pluralité d'éléments de batterie (10) est un élément de batterie (10) selon l'une quelconque des revendications 1 à 11.

13. Dispositif consommateur d'énergie, comprenant : une batterie (50) selon la revendication 12.
